# FASCICULE DE BREVET EUROPEEN

(11) **EP 3 759 059 B1**
(45) Date de publication et mention de la délivrance du brevet: **21.08.2024**
(21) Numéro de dépôt: 19713529.6
(22) Date de dépôt: 22.02.2019
(51) Int. Cl.: C03C 17/00, C03C 17/22

(54) **PROCEDE DE TRAITEMENT D'UN RECIPIENT A PAROI EN VERRE ET INSTALLATION AFFERENTE**
VERFAHREN ZUR BEHANDLUNG EINES BEHÄLTERS MIT EINER GLASWAND UND ZUGEHÖRIGE VORRICHTUNG
METHOD FOR TREATING A GLASS-WALLED CONTAINER AND CORRESPONDING APPARATUS

(30) Priorité: 27.02.2018 FR 1851747
(43) Date de publication de la demande: 06.01.2021
(73) Titulaire: SGD S.A., 92066 Paris la Défense Cédex (FR)
(72) Inventeur: DEPOILLY, Christophe, 80210 AIGNEVILLE (FR); ETCHEPARE, Pierre-Luc, 76000 ROUEN (FR); ZHANG, Jingwei, 91300 MASSY (FR)
(74) Mandataire: Cabinet Didier Martin
(86) Numéro de dépôt international: PCT/FR2019/050410
(87) Numéro de publication internationale: WO 2019/166719

(56) Documents cités:
- WO-A1-2017/060636
- FR-A- 1 461 182
- JP-A- S5 864 248
- US-A- 3 451 796
- US-A- 5 314 534
- US-A1- 2009 000 336
- US-A1- 2011 244 153
- US-A1- 2015 108 078

## Description

### DOMAINE TECHNIQUE

L'invention se rapporte au domaine général des procédés et installations de traitement de récipients à paroi verre.

L'invention concerne plus précisément un procédé de traitement d'un récipient comprenant une paroi en verre délimitant une cavité d'accueil pour un produit, ladite paroi en verre présentant une face interne située en regard de ladite cavité d'accueil et une face externe opposée, ladite paroi en verre étant pourvue d'un premier revêtement qui inclut un composé résiduel solide résultant d'une étape de traitement de surface de ladite paroi en verre à laquelle ledit récipient a été préalablement soumis.

L'invention concerne également une installation de traitement d'un récipient comprenant une paroi en verre délimitant une cavité d'accueil pour un produit, ladite paroi en verre présentant une face interne située en regard de ladite cavité d'accueil et une face externe opposée, ladite installation comprenant un poste de traitement de surface de ladite paroi en verre pour soumettre ledit récipient à une étape de traitement de surface de ladite paroi en verre conduisant à la formation sur ladite paroi en verre d'un premier revêtement qui inclut un composé résiduel solide.

### TECHNIQUE ANTERIEURE

Dans le domaine des emballages primaires en verre à usage pharmaceutique, on cherche à proposer des récipients, en particulier de type flacon, qui présentent une excellente compatibilité chimique avec le produit ou préparation qu'ils sont destinés à contenir. On vise en effet à prévenir toute interaction préjudiciable entre une espèce issue du verre formant le récipient et le produit que ce dernier contient.

Dans ce contexte, les pharmacopées identifient trois grands types de récipients en verre différents, qui peuvent être acceptables pour un usage pharmaceutique selon la nature de la préparation considérée. Ces récipients sont classés selon leur niveau de résistance hydrolytique, c'est-à-dire selon la résistance qu'offre le verre, dont ils sont formés, à la cession de substances inorganiques hydrosolubles dans des conditions fixées de contact entre la surface du récipient en verre considéré et l'eau. On distingue ainsi les récipients en verre borosilicate, dits de « *Type I* », qui présentent intrinsèquement une excellente résistance hydrolytique et qui conviennent dès lors pour la plupart des préparations pharmaceutiques, et les récipients en verre silicosodocalcique classique, dits de « *Type III* », dont la résistance hydrolytique est bien moins avantageuse. De ce fait, ces derniers trouvent un usage limité aux préparations en véhicule non-aqueux pour usage parentéral, aux poudres pour usage parentéral (sauf préparations lyophilisées) et aux préparations pour usage non parentéral. On distingue également des récipients en verre dits de « *Type II* », qui sont quant à eux des récipients en verre silicosodocalcique classique, comme ceux de Type III, mais dont la face interne a été soumise à un traitement de surface spécifique afin d'améliorer significativement leur résistance hydrolytique. Les récipients en verre de Type II présentent ainsi une très bonne résistance hydrolytique, qui les rend aptes au conditionnement de la plupart des préparations aqueuses acides et neutres.

On connaît en particulier un procédé de traitement de surface d'un récipient en verre de Type III pour obtenir un récipient en verre de Type II, qui consiste en substance à extraire, sur une profondeur de plusieurs dizaines de nanomètres, le sodium présent au voisinage de la surface de la face interne du récipient en verre silicosodocalcique. On parle alors d'un traitement de désalcalinisation du verre, et il est habituellement réalisé en ligne par le fabricant du récipient, c'est-à-dire à l'aide de moyens directement intégrés à la ligne de production verrière.

De manière connue, ce procédé de traitement de surface peut prévoir l'injection à l'intérieur d'un récipient à traiter, lorsque celui-ci est encore à une température élevée après sa sortie de la machine de formage, d'un composé soufré tel qu'en particulier du sulfate d'ammonium (NH₄)₂SO₄ sous forme cristalline poudreuse. Sous l'effet de la chaleur, les cristaux de sulfate d'ammonium se subliment et forment un gaz qui réagit avec le sodium contenu dans le verre au voisinage immédiat de la surface interne du récipient traité. Le sodium ainsi extrait du verre se dépose alors à la surface de la face interne du récipient sous la forme d'un voile, plus ou moins prononcé, d'un composé poudreux résiduel de sulfate de sodium Na₂SO₄. D'aspect laiteux ou blanchâtre, ce voile n'est généralement pas formé de manière homogène à la surface du récipient, de sorte que certaines zones de celle-ci paraissent localement plus opaques que d'autres. Des petites tâches plus particulièrement marquées peuvent également être observées sur les parois du récipient.

Si ce voile résiduel ne pose pas, en général, de problème particulier pour le conditionnement ultérieur de préparations, puisque les récipients en verre concernés sont habituellement soigneusement lavés préalablement au conditionnement, il peut en revanche s'avérer particulièrement gênant pour certaines opérations de contrôle qualité en sortie de ligne de production verrière. Premièrement, le manque de transparence de ce voile peut rendre difficile l'inspection optique des défauts verriers, au détriment de la qualité du récipient. Deuxièmement, l'aspect hétérogène, non uniforme, du dépôt résiduel et la présence de tâches à la surface du récipient en verre de Type II peuvent engendrer une mise au rebus injustifiée (faux rejet). En effet, en fonction du réglage du contraste et de la sensibilité du système d'inspection optique employé, une tache prononcée à la surface d'un récipient est, par exemple, susceptible d'être interprétée comme un défaut verrier et d'entraîner la mise au rebut non justifiée du récipient concerné et, par conséquent, un manque à gagner pour le fabricant de récipients.

Bien évidemment, il serait envisageable de débarrasser les récipients en verre de Type II de leur voile résiduel, par exemple par lavage, préalablement à leur inspection. En pratique, cette solution n'est généralement pas retenue par les fabricants de récipients en verre, car elle impliquerait la mise en oeuvre de moyens complémentaires coûteux et complexes, qui ne sont en général pas compatibles avec une ligne de production industrielle classique de récipients en verre. En outre, la présence d'un tel voile blanc à la surface d'un récipient en verre constitue souvent, dans le domaine des emballages primaires en verre à usage pharmaceutique et aux yeux des acteurs du conditionnement de préparations pharmaceutiques, une signature singulière des récipients en verre de Type II, qui les différencie visuellement en particulier des récipients en verre de Type III, de résistance hydrolytique moindre.

Le document FR-1 461 182 A divulgue un procédé pour traiter les surfaces d'articles en verre pour abaisser leur alcalinité superficielle, consistant à soumettre les surfaces à traiter à de l'anhydride sulfurique gazeux et ensuite à soumettre les articles à une température élevée pour faire réagir l'anhydride sulfurique avec les oxydes de métaux alcalins de la surface de l'article.

### EXPOSE DE L'INVENTION

Les objets assignés à la présente invention visent en conséquence à remédier aux différents inconvénients énumérés précédemment et à proposer un nouveau procédé de traitement, ainsi qu'une installation correspondante, qui permettent de faciliter l'inspection optique de la paroi en verre d'un récipient à la surface de laquelle a été déposé un composé résiduel solide.

Un autre objet de l'invention vise à proposer un nouveau procédé qui est de mise en oeuvre simple et peu onéreuse, ne requérant pour sa mise en oeuvre que des moyens industriels simples et standards, tout en étant particulièrement efficace.

Un autre objet de l'invention vise à proposer un nouveau procédé particulièrement fiable, robuste et répétable, tout en étant de mise en oeuvre sûre.

Un autre objet de l'invention vise à proposer un nouveau procédé de traitement qui peut être mis en oeuvre en ligne, et autorise des cadences de traitement élevées.

Un autre objet de l'invention vise à proposer une nouvelle installation qui permet un traitement efficace, sûr et rapide d'un récipient à paroi en verre.

Un autre objet de l'invention vise à proposer une nouvelle installation dont la conception et la mise en oeuvre sont particulièrement simples et économiques.

Un autre objet de l'invention vise à proposer une nouvelle installation qui est particulièrement robuste et fiable.

Les objets assignés à l'invention sont atteints à l'aide d'un procédé selon la revendication 1.

Les objets assignés à l'invention sont également atteints à l'aide d'une installation selon la revendication 10.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés uniquement à titre d'exemple illustratif et non limitatif, dans lesquels :

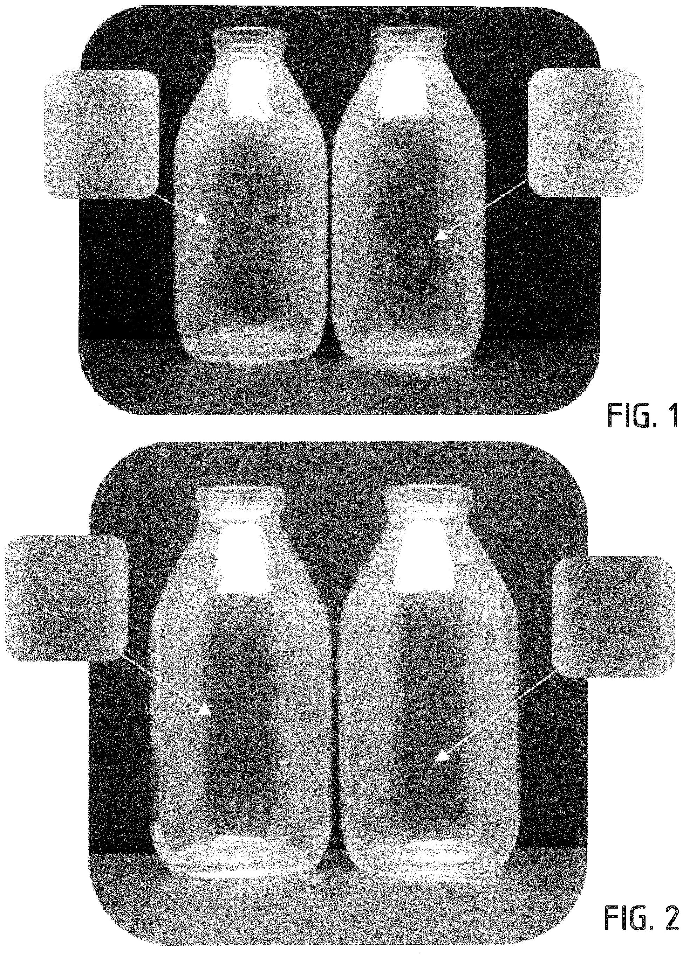

- La figure 1 illustre, des récipients de type flacon dont la paroi en verre est pourvue d'un premier revêtement qui inclut un composé résiduel solide résultant d'une étape de traitement de surface de ladite paroi en verre (en l'espèce, d'une étape de désalcanisation du verre au voisinage de la surface de la face interne de la paroi en verre) à laquelle ledit récipient a été préalablement soumis. Un grossissement est fait sur une zone de la paroi en verre de ces récipients, de sorte à mettre en avant le caractère non uniforme et non totalement transparente du premier revêtement en question ;
- La figure 2 illustre des récipients obtenus en soumettant les récipients de la figure 1 au procédé de traitement selon l'invention. Un grossissement est fait sur une zone de la paroi en verre des récipients, de sorte à mettre en avant le caractère plus uniforme et plus transparent du deuxième revêtement formé à la surface de la paroi en verre ;

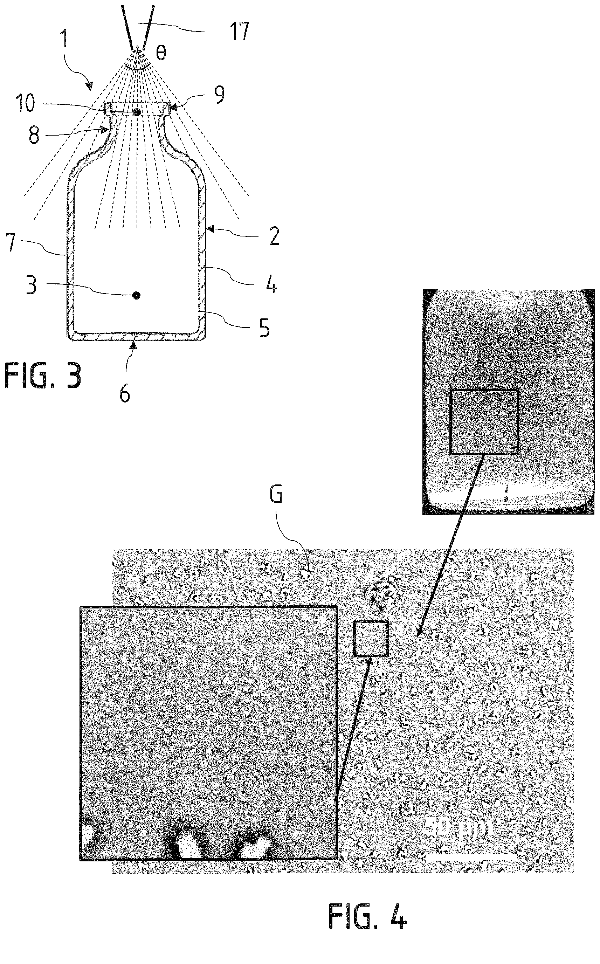

- La figure 3 illustre, de manière schématique, un récipient de type flacon soumis à un mode de réalisation préférentiel de l'étape de projection de gouttelettes de liquide du procédé de traitement selon l'invention ;

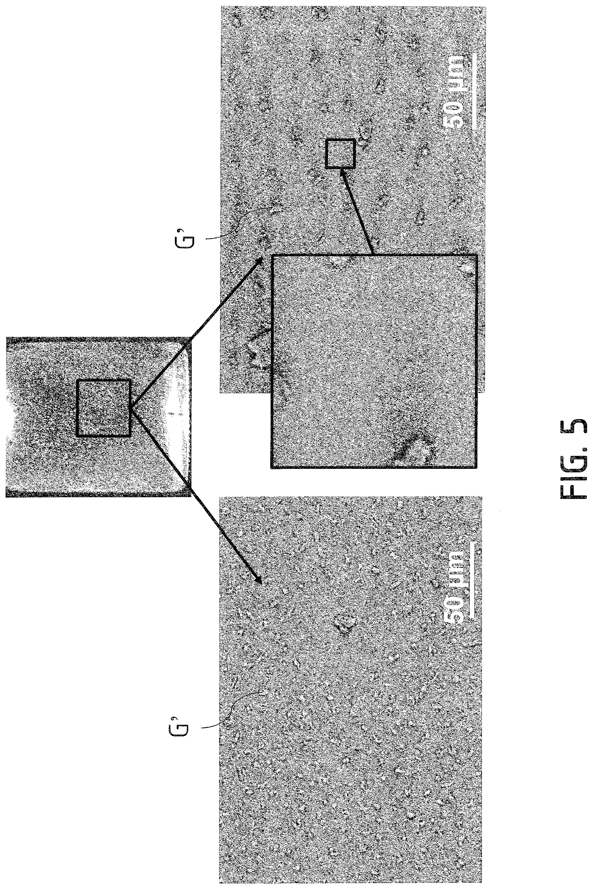

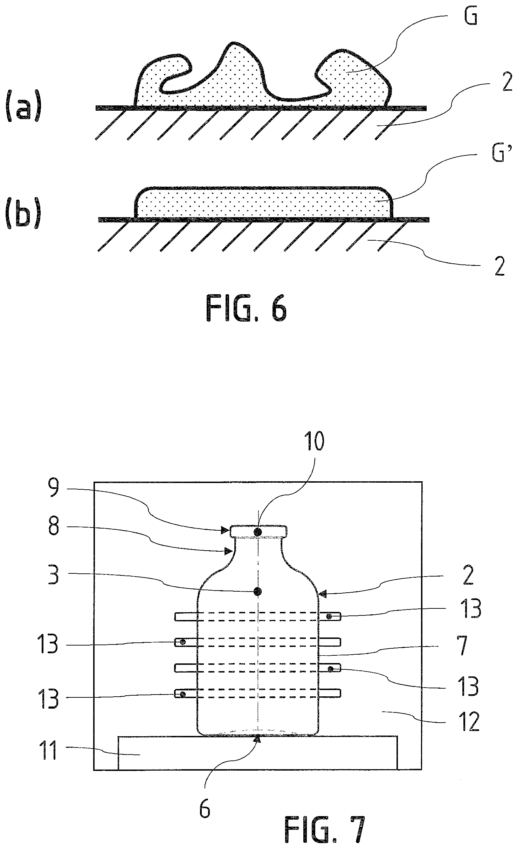

- Les figures 4 et 5 mettent en avant des clichés pris en microscopie électronique à balayage (MEB) de la surface de la paroi en verre de deux récipients à paroi en verre conformes à ceux concernés par l'invention, le premier récipient n'ayant pas été soumis au procédé selon l'invention (figure 4), contrairement au deuxième récipient (figure 5). La figure 6 illustre, de manière schématique, une modification, provoquée par le procédé selon l'invention, de la morphologie de grains du composé résiduel d'un revêtement dont est pourvue la paroi des récipients concernés par l'invention ;

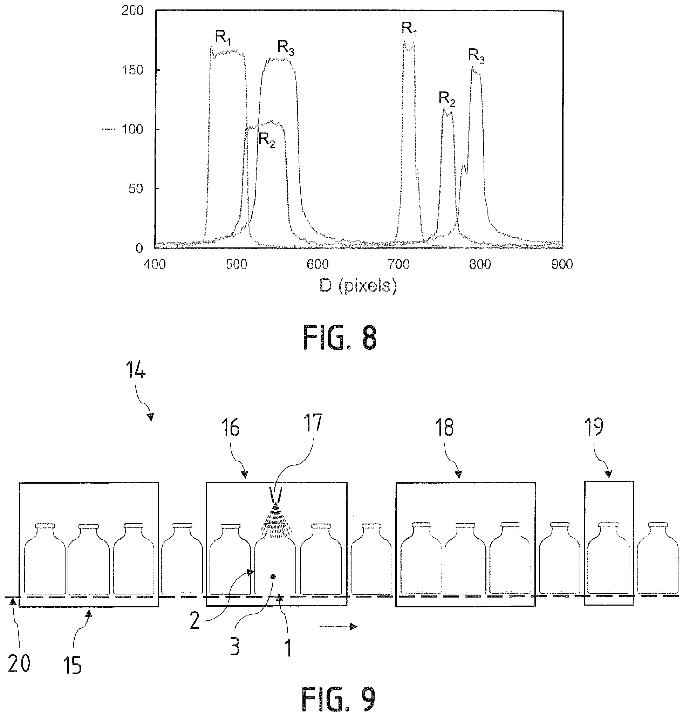

- La figure 7 illustre, de manière schématique, un montage expérimental permettant d'évaluer le caractère uniforme du deuxième revêtement obtenu à l'issue du procédé selon l'invention. La figure 8 illustre quant à elle sous forme d'un graphe des résultats obtenus au cours d'essais d'évaluation de ce caractère uniforme à l'aide du montage de la figure 7 ;
- La figure 9 illustre, de manière schématique, un mode de réalisation particulièrement avantageux de l'installation selon l'invention.

### MEILLEURE MANIERE DE REALISER L'INVENTION

Selon un premier aspect, l'invention concerne un procédé de traitement d'un récipient 1 comprenant une paroi en verre 2 délimitant une cavité d'accueil 3 pour un produit (ou substance), ladite paroi en verre 2 présentant une face interne 4, située en regard de ladite cavité d'accueil 3 et préférentiellement destinée à venir en contact direct avec ledit produit, et une face externe 5 opposée. Le récipient 1 concerné est donc préférentiellement un récipient en verre creux. De préférence, ledit produit est avantageusement fluide, c'est-à-dire susceptible de s'écouler comme par exemple une substance liquide, pâteuse (tel qu'un liquide avec un degré de viscosité élevé) ou pulvérulente. De préférence, le récipient 1 forme un récipient conçu pour contenir un produit ou une substance de nature pharmaceutique, comme par exemple un médicament, destiné éventuellement à être administré par voie parentérale (générale ou locorégionale) ou encore à être ingéré ou absorbé par un patient, ou encore une substance de nature diagnostique, comme par exemple un réactif chimique ou biologique. Par extension, ledit récipient 1 peut être conçu pour contenir une substance de nature biologique (ou fluide corporel), tel que par exemple du sang, un produit ou un sous-produit sanguin, de l'urine, etc. Même si l'application aux domaines pharmaceutiques et diagnostiques est préférée, l'invention n'est toutefois pas limitée à des récipients à usage pharmaceutique ou diagnostique et concerne également, à titre de variante alternative, un récipient conçu pour contenir une substance liquide, pâteuse ou pulvérulente à usage industriel (stockage de produits chimiques, etc.), vétérinaire, alimentaire, ou encore cosmétique.

Le récipient 1 concerné peut présenter toute forme adaptée à sa fonction, comme par exemple la forme d'un flacon ou d'une bouteille. Dans ce cas, la paroi en verre 2 est formée avantageusement par un fond 6 en verre, une paroi latérale 7 en verre qui s'élève à partir et à la périphérie du fond 6 et un col 8 pourvu d'une bague 9 qui ferme le récipient 1 tout en ménageant une ouverture 10 de remplissage / distribution permettant de mettre en communication la cavité 3 avec l'extérieur. Ladite ouverture 10 est avantageusement prévue pour pouvoir être obturée par un bouchon ou un opercule amovible ou perforable). Il est cependant parfaitement envisageable que le récipient 1 affecte tout autre forme, et en particulier une forme dépourvue de col, comme par exemple une forme de pot, de tube, d'ampoule, de seringue, ou autre, en fonction de l'usage visé. Un tel récipient 1 à paroi en verre, et en particulier en forme de flacon, peut être obtenu par tout procédé verrier classique (verre moulé, verre soufflé, verre étiré, procédé Vello ou procédé Danner, etc.).

Le terme « *verre* » doit être ici préférentiellement compris dans son acceptation classique, et désigne donc un verre minéral. De manière préférentielle, le verre constituant la paroi 2 du récipient 1 est transparent (ou au moins translucide) en tant que tel, de sorte à autoriser l'inspection visuelle dudit récipient 1, par des moyens optiques classiques, à la recherche d'éventuels défauts verriers présents, en particulier, dans l'épaisseur de ladite paroi 2 ou au niveau de sa face interne 4. Egalement, le caractère transparent (ou au moins translucide) du verre peut s'avérer impératif, dans le cas d'un produit de nature pharmaceutique, pour autoriser l'inspection visuelle dudit produit, une fois ce dernier conditionné dans ledit récipient. De préférence encore, le verre constituant la paroi du récipient est incolore (verre blanc), mais peut néanmoins alternativement être coloré, par exemple par des oxydes métalliques, pour protéger la substance fluide contenue au sein du récipient des effets de la lumière, en particulier dans certaines plages de longueur d'onde (UV, etc.).

De manière plus spécifique, la paroi en verre 2 du récipient 1 concerné par le procédé de l'invention est pourvue d'un premier revêtement qui inclut un composé résiduel solide résultant d'une étape de traitement de surface de ladite paroi en verre 2 à laquelle ledit récipient 1 a été préalablement (et de préférence volontairement) soumis. Avantageusement, ledit composé résiduel est une substance solide, dont la formation et le dépôt à la surface de la paroi en verre 2 du récipient 1 sous la forme dudit premier revêtement sont la conséquence d'une étape de traitement de surface que ledit récipient 1, et en particulier la paroi en verre 2 de ce dernier, a subi préalablement à la mise en oeuvre du procédé selon l'invention. De préférence, ledit composé résiduel est poudreux, granuleux.

Le terme « *composé résiduel* » renvoie préférentiellement ici à un produit ou sous-produit non spécifiquement désiré de ladite étape de traitement de surface. En d'autres termes, si la formation, à la surface de la paroi en verre 2, du premier revêtement incluant ledit composé résiduel solide est une conséquence éventuellement connue et prévisible de ladite étape de traitement de surface, elle n'en constitue de préférence pas un phénomène spécifiquement et volontairement recherché, et ledit composé résiduel n'a préférentiellement pas vocation à être conservé à la surface de la paroi en verre 2 du récipient 1, en usage normal de ce dernier. De préférence, ledit composé résiduel est une substance susceptible de conférer au premier revêtement un caractère observable optiquement, de préférence dans le domaine du visible. De manière préférentielle, ledit premier revêtement affecte la forme d'un voile blanchâtre ou coloré, qui est de préférence non uniforme, non homogène et / ou présente une certaine opacité dans le domaine du visible. Ledit premier revêtement n'est pas nécessairement continu et ne couvre pas nécessairement toute la surface de ladite paroi en verre 2.

L'expression « *traitement de surface* » renvoie préférentiellement, dans le contexte de la présente invention, à une opération visant la modification des propriétés physiques et / ou chimiques du verre à la surface ou au voisinage immédiat de la surface de la paroi en verre 2 du récipient 1.

Plus précisément, ladite paroi en verre 2 du récipient 1 est en verre contenant au moins un oxyde alcalin ou alcalino-terreux (tel que préférentiellement un verre silicosodocalcique), et l'étape de traitement de surface, à laquelle a été préalablement soumis le récipient concerné par le procédé selon l'invention, est une étape de désalcalinisation du verre au voisinage de la surface de la face interne 4 de la paroi en verre 2 du récipient 1. Eventuellement, comme on le reverra ci-après, ladite étape de désalcalinisation peut également avoir affecté, dans une certaine mesure, le verre au voisinage de la surface de la face externe 5 de la paroi en verre 2 dudit récipient 1. En d'autres termes, ladite étape de traitement de surface aura consisté à appauvrir en ions alcalins (par exemple, en ions sodium) le verre formant la paroi 2 du récipient 1, au niveau de la surface de la face interne 4 de ladite paroi en verre 2 (ainsi, éventuellement, qu'au niveau de la surface de la face externe 5 de cette dernière), et de préférence sur une profondeur de plusieurs dizaines de nanomètres. Ainsi, le récipient 1 concerné par le procédé selon l'invention peut avantageusement être un récipient en verre de Type II, qui a été obtenu à partir d'un récipient en verre de Type III (verre silicosodocalcique classique) qui a subi une étape de désalcalinisation. Cependant, il pourra éventuellement s'agir d'un récipient en verre de Type I (verre borosilicate) ou encore d'un récipient en verre aluminosilicate, qui a subi une étape de désalcalinisation, dès lors qu'il s'agit bien de verres contenant au moins un oxyde alcalin ou alcalino-terreux.

De préférence, ladite étape de désalcalinisation comprend un traitement de ladite face interne 4 avec une substance contenant du soufre, laquelle substance est préférentiellement introduite au sein de la cavité d'accueil 3 du récipient 1 alors que ce dernier est à une température élevée (typiquement de l'ordre de 500 à 650 °C), par exemple immédiatement en sortie d'une étape de formage du récipient 1 ou alors que ledit récipient 1 est soumis à une étape de recuisson, postérieurement à une telle étape de formage du récipient 1. De manière plus préférentielle encore, ladite substance est du sulfate d'ammonium (NH₄)₂SO₄ sous forme cristalline poudreuse. Ledit composé résiduel solide contient ainsi du sulfate de sodium Na₂SO₄, sous forme poudreuse, qui peut être déposé de manière particulièrement non uniforme à la surface de la face interne 4 de ladite paroi en verre 2 du récipient 1 (et éventuellement également à la surface de la face externe 5 de cette dernière), tel qu'illustré à la figure 1. Alternativement, ladite substance pourrait être du dioxyde de soufre SO₂ ou du trioxyde de soufre SO₃, ou encore une substance contenant du soufre et du fluor, dont la mise en oeuvre pourrait également conduire, dans certaines conditions, à la formation, à la surface de la paroi en verre 2, d'un revêtement dont l'uniformité est perfectible.

Conformément à l'invention, le procédé de traitement du récipient 1 à paroi en verre comprend une étape de projection à, en direction de, la surface de ladite paroi en verre 2 (ou d'au moins une partie de celle-ci) de gouttelettes d'un liquide, afin de former sur ladite paroi en verre 2, à partir dudit premier revêtement, un deuxième revêtement qui est avantageusement plus transparent et / ou plus uniforme que ledit premier revêtement, comme cela va être explicité ci-après.

Selon l'invention, le deuxième revêtement ainsi formé inclut ledit composé résiduel. En effet, l'étape de projection de liquide du procédé selon l'invention diffère d'une étape de lavage de la paroi en verre 2, en ce que le composé résiduel est toujours présent à la surface de ladite paroi en verre 2 à l'issue de ladite étape de projection. Ainsi, alors que le premier revêtement de la paroi en verre 2 inclut, avant l'étape de projection du procédé selon l'invention, une première quantité massique de composé résiduel, le deuxième revêtement formé à l'issue de ladite étape de projection inclut avantageusement une deuxième quantité massique dudit composé résiduel, qui est sensiblement égale (ou éventuellement très légèrement inférieure) à ladite première quantité massique. La présence, à l'issue du procédé selon l'invention, du composé résiduel dans le deuxième revêtement formé à la surface de la paroi en verre 2 pourra être avantageusement observée de manière visuelle (présence d'un voile ou d'un trouble visible), et pourra dans tous les cas être vérifiée par une observation à l'aide de moyens d'analyse optique plus poussés, par exemple par microscopie.

Ainsi, l'invention repose sur l'idée de projeter des gouttelettes, c'est-à-dire de fines gouttes, de liquide sur ledit premier revêtement préalablement formé à la surface de la paroi en verre 2 du récipient 1, de sorte à former avantageusement une couche (ou tapis) de gouttelettes distinctes et espacées à la surface de ladite paroi en verre 2 sur laquelle a été formé ledit premier revêtement qui inclut le composé résiduel solide. En particulier, ce dernier ayant été préférentiellement formé au moins à la surface de la face interne 4 de la paroi en verre 2 du récipient 1, ladite étape de projection consiste à projeter lesdites gouttelettes au moins à la surface de ladite face interne 4, et plus spécifiquement encore, au niveau de la paroi latérale 7 dudit récipient 1.

Lesdites gouttelettes de liquide, ainsi mises en contact localement en contact direct avec le premier revêtement incluant le composé résiduel, et interagissent alors avec ce dernier de sorte à en modifier au moins une caractéristique, ce qui influe sur les propriétés optiques de la paroi en verre 2 revêtue.

En effet, il a été observé que, de manière très intéressante, la projection de telles gouttelettes peut avantageusement permettre de modifier, à la surface de la paroi en verre 2, la configuration du composé résiduel. En particulier, dans le cas préférentiel où le composé résiduel est poudreux, granuleux, la projection de gouttelettes permet avantageusement de dissocier localement les amas de grains et de redistribuer les grains de manière plus étalée, plus uniforme, en regard de la surface de la paroi en verre 2.

Le procédé selon l'invention peut ainsi permettre d'obtenir, à la surface de la paroi en verre du récipient 1, un deuxième revêtement qui est plus uniforme, plus homogène que le premier revêtement initialement présent à la surface de la paroi en verre 2 du récipient 1. Ceci conduit avantageusement à une atténuation des variations locales de quantité de composé résiduel à la surface de ladite paroi 2, susceptibles de former des zones qui apparaissent plus opaques que d'autres. En outre, les effets de tâches initialement observables à la surface de la paroi en verre 2 sont notablement atténués, ou même totalement supprimés. Cet effet d'uniformisation est particulièrement visible à la figure 2, qui illustre en exemple des récipients obtenus à l'issue du procédé selon l'invention, à partir de récipients à paroi en verre silicosodocalcique soumis à un traitement de désalcalinisation au sulfate d'ammonium, tels que ces derniers sont illustrés à la figure 1.

En pratique, le caractère uniforme, homogène, du deuxième revêtement formé à l'issue de ladite étape de projection, peut être caractérisé de la façon suivante. On place le récipient 1 à paroi en verre 2, traité conformément l'invention, verticalement devant un fond de couleur homogène (par exemple, noir), et on illumine le récipient 1 à l'aide d'une lampe positionnée en-dessous et en regard du fond 6 du récipient 1. Puis, à l'aide d'un appareil photo reflex numérique ou d'un dispositif similaire, on prend une photographie de face du récipient 1 et du fond de couleur homogène. Ensuite, grâce à un logiciel de traitement d'image (par exemple, à l'aide du logiciel « *ImageJ* » développé par les *National Institutes of Health* des Etats-Unis d'Amériques), on convertit la photographie prise en une image numérique en niveau de gris 8 bits. Toujours à l'aide du logiciel de traitement d'image, on sélectionne une surface rectangulaire, correspondant de préférence à une zone plus ou moins étendue de la paroi latérale 7 du récipient 1, et on trace la courbe de niveau de gris sur la totalité de la surface rectangulaire sélectionnée. Enfin, à partir des données correspondant à cette courbe de niveau de gris, on calcule la variance des niveaux de gris de la surface rectangulaire (par exemple à l'aide d'un logiciel tableur). La variance ainsi calculée est représentative du degré d'uniformité de la teinte de la zone surfacique sélectionnée de la paroi latérale 7, et donc du degré d'uniformité du revêtement formé conformément à l'invention. Plus la valeur de la variance est faible, plus le revêtement est uniforme. Il est également possible de vérifier le gain apporté par le procédé selon l'invention en matière d'uniformité, en comparant les variances respectives obtenues, selon la méthode exposée ci-dessus, à partir de photographies prises d'un même récipient avant et après que celui-ci ait été soumis audit procédé. Bien évidemment, toute autre méthode convenable pourra être mise en oeuvre pour vérifier et quantifier l'effet d'uniformisation obtenu.

Avantageusement, l'étape de projection du procédé selon l'invention permet, comme introduit ci-avant, la formation d'un deuxième revêtement qui, bien qu'incluant toujours ledit composé résiduel, est plus transparent que le premier revêtement initialement présent à la surface de la paroi en verre 2 du récipient 1. En effet, il a été observé que la projection de gouttelettes peut permettre, dans une certaine mesure, et selon la nature et la quantité de composé résiduel déposé, d'augmenter la transparence de la paroi en verre 2 revêtue du récipient 1. Alors que ladite paroi en verre 2 pourvue du premier revêtement présente, avant ladite étape de projection, un premier niveau transparence (c'est-à-dire qu'elle autorise la transmission à travers elle d'une certaine quantité de lumière à laquelle elle est exposée), ladite paroi 2 présente en effet avantageusement, après ladite étape de projection, un deuxième niveau de transparence, qui est supérieur audit premier niveau de transparence. Une méthode de caractérisation, de vérification, du gain en transparence avantageusement apporté par le procédé selon l'invention est exposée plus loin.

Dans certains cas, comme on le verra dans les essais décrits plus loin, l'étape de projection du procédé selon l'invention permet, de manière particulièrement intéressante et inattendue, de former sur ladite paroi en verre 2, à partir dudit premier revêtement, un deuxième revêtement qui inclut ledit composé résiduel et qui est non seulement plus transparent, mais également plus uniforme que le premier revêtement initialement présent à la surface de ladite paroi en verre 2.

Le procédé selon l'invention permet ainsi de faciliter grandement l'inspection optique ultérieure du récipient 1 concerné, à la recherche de défauts verriers au niveau de la paroi en verre du récipient, sans nécessiter de débarrasser au préalable la paroi en verre 2 du récipient 1 du dépôt de composé résiduel. En l'espèce, la formation d'un deuxième revêtement plus uniforme, bien que contenant toujours ledit composé résiduel, contribue avantageusement à une meilleure identification des défauts verriers à fort contraste et de réduire le risque de faux rejet. L'obtention d'un deuxième revêtement plus transparent permet avantageusement de faciliter la détection de la plupart des défauts verriers à plus faible contraste (tel que par exemple des tachés). De préférence, ledit liquide est projeté à la surface de ladite paroi en verre 2, au cours de ladite étape de projection, sous la forme d'un brouillard, c'est-à-dire sous la forme de très fines gouttelettes d'un diamètre moyen typiquement inférieur voire très inférieur à 1 mm, en suspension dans l'air ambiant (aérosol liquide). De manière particulièrement avantageuse, on préférera une projection par nébulisation et / ou atomisation, par exemple, de sorte qu'au moins 95 % desdites gouttelettes projetées aient un diamètre compris entre 1 et 10 µm, et de préférence entre 2 et 3 µm. En effet, le recours à des gouttelettes de très faible diamètre permet non seulement de limiter avantageusement le phénomène de coalescence de ces dernières à la surface de la paroi en verre 2, et les effets de ruissellement qui pourraient en découler, mais également de faciliter la mise en contact desdites gouttelettes avec une paroi en verre 2 de géométrie complexe. Afin d'optimiser ladite étape de projection de liquide, il est en outre et/ou alternativement possible de projeter lesdites gouttelettes à l'aide d'un gaz vecteur, de préférence inerte (Ar, N₂, etc.). Le débit de liquide (et donc la quantité et le volume des gouttelettes projetées) et / ou la pression du gaz vecteur sont bien évidemment avantageusement régulé(s), adapté(s), en fonction de la superficie de la paroi en verre 2 du récipient 1 à traiter, et de sorte à limiter le risque de coalescence des gouttelettes sur la surface de la paroi en verre 2.

De manière avantageuse, le liquide projeté au cours de l'étape de projection du procédé selon l'invention est un liquide transparent et, plus avantageusement encore, incolore. Selon une variante, ledit liquide est un liquide dans lequel le composé résiduel solide est susceptible de se disperser, d'être mis en suspension. Selon une autre variante, plus avantageuse, ledit liquide est un solvant du composé résiduel solide, c'est-à-dire un liquide dans lequel ledit composé résiduel solide est susceptible de se dissoudre, au moins partiellement. En effet, la mise en oeuvre d'un solvant s'avère favorable à l'obtention d'un deuxième revêtement particulièrement uniforme, que ce revêtement soit humide, c'est-à-dire formé du composé résiduel dissous dans les gouttelettes de solvant, ou au contraire sec, c'est-à-dire formé du seul composé résiduel redéposé à la surface de la paroi en verre 2 après séchage / évaporation du solvant. Egalement, l'emploi d'un solvant peut avantageusement contribuer à l'obtention d'un deuxième revêtement significativement plus transparent que le premier revêtement.

De préférence, ledit solvant (ou ledit liquide, dans ce cas où ce dernier n'est pas un solvant) est de l'eau, de préférence encore de l'eau ultra pure. On évite ainsi avantageusement le recours à un liquide, solvant ou non, susceptible de contaminer le récipient 1 et / ou nécessitant des moyens de mise en oeuvre et de recyclage contraignants, notamment pour des raisons sanitaires ou environnementales. Ainsi, dans le cas où ledit composé résiduel comprend du sulfate de sodium, on préférera l'eau ultra pure au glycérol ou encore à l'acide sulfurique dilué, pourtant également connus comme solvants du sulfate de sodium. Le procédé selon l'invention est ainsi de mise en oeuvre particulièrement simple, peu onéreuse et sûre.

De préférence, ladite étape de projection est réalisée sur ledit récipient 1, ce dernier étant à température comprise entre 0 et 100 °C, et de préférence encore à température ambiante. Ledit liquide est quant à lui avantageusement projeté à la surface de ladite paroi en verre 2 à température ambiante, ou éventuellement à une température plus élevée (par exemple à 70°C). Si l'élévation de la température est en effet susceptible de favoriser la dissolution ou la mise en suspension du composé résiduel dans les gouttelettes de liquide projetées, on évitera cependant un trop grand écart de température entre la paroi en verre 2 et le liquide projeté, afin de limiter notamment le risque de coalescence rapide des gouttelettes à la surface de ladite paroi 2. En outre, la mise en oeuvre de températures trop élevées risquerait de provoquer une évaporation trop rapide du liquide, avec une dissolution ou une mise en suspension insuffisante du composé résiduel, préjudiciable au bon fonctionnement du procédé selon l'invention, c'est-à-dire à son fonctionnement optimal.

De manière avantageuse, ladite étape de projection est réalisée simultanément à la surface desdites faces interne 4 et externe 5 de ladite paroi en verre 2 du récipient 1. En effet, bien que visant préférentiellement le traitement de la surface de la face interne 4 de la paroi en verre 2 du récipient 1 (traitement interne), ladite étape de traitement de surface peut néanmoins avoir également affecté, volontairement ou non, la surface de la face externe 5 de ladite paroi 2. Ainsi, ledit premier revêtement a pu également être formé à la surface de ladite face externe 5. En particulier, dans le cas préférentiel évoqué ci-avant où ladite étape de traitement de surface est une étape de désalcalinisation du verre au voisinage de la surface de la face interne 4 de la paroi en verre 2 du récipient 1, il est possible que des espèces réactives s'échappent de la cavité d'accueil 3 du récipient 1 au cours de l'étape de désalcalinisation et viennent également réagir avec le verre au voisinage de la surface de la face externe 5 de la paroi en verre 2. Dans ce cas, la projection simultanée des gouttelettes de liquide à la surface desdites faces interne 4 et externe 5 permet ainsi avantageusement de modifier simultanément, à la surface de ces dernières, une ou plusieurs caractéristiques du composé résiduel pour former sur chaque de ces surfaces un revêtement plus uniforme et / ou plus transparent incluant ledit composé résiduel.

En outre, une telle projection simultanée des gouttelettes de liquide à la surface desdites faces interne 4 et externe 5 permet avantageusement de simplifier ladite étape de projection. Celle-ci peut en effet être dès lors aisément mise à oeuvre à l'aide d'un dispositif de projection fixe (par exemple de type buse) et positionné à l'extérieur dudit récipient 1, préférentiellement au-dessus et en regard de la bague 9 et de l'ouverture 10 de ce dernier, tel qu'illustré schématiquement à la figure 3. Il n'est dès lors pas nécessaire de recourir à un dispositif d'injection mobile complexe (par exemple de type pipette ou tube) que l'on viendrait introduire dans la cavité d'accueil 3 du récipient 1 à traiter par l'ouverture 10 de ce dernier pour projeter les gouttelettes de liquide, ce qui pourrait nécessiter en outre l'immobilisation au moins temporaire dudit récipient 1.

Avantageusement, tel qu'illustré à la figure 3, lesdites gouttelettes de liquide sont préférentiellement projetées, au cours de ladite étape de projection, sensiblement selon un cône de projection avantageusement plein, et d'angle θ préférentiellement compris entre 20 et 100°, selon la géométrie et les dimensions du récipient à traiter et selon la distance séparant le dispositif de projection de la bague 9 et de l'ouverture 10 du récipient 1.

De préférence, le procédé selon l'invention comprend, après ladite étape de projection, une étape de séchage forcé de ladite paroi en verre 2, c'est-à-dire une étape de séchage accéléré et contrôlé de cette dernière. Ladite étape de séchage peut être avantageusement réalisée par projection, en direction de la surface de la paroi en verre 2, d'un flux forcé de gaz sec (air ou gaz inerte, tel que Ar, N₂, etc.), de sorte à sécher ladite paroi en verre 2 par évaporation contrôlée des gouttelettes de liquide. Alternativement, on pourra envisager que le récipient 1 soit placé verticalement, bague 9 vers le haut, dans un flux forcé ascendant de gaz sec. Avantageusement, cette étape de séchage forcé est réalisée après un temps de contact entre lesdites gouttelettes de liquide et le premier revêtement de l'ordre de quelques secondes (typiquement entre 1 et 5 s, en fonction notamment de la géométrie et les dimensions du récipient à traiter, ou encore selon la nature du composé résiduel et / ou du liquide projeté). A l'issue de cette étape de séchage, on obtient ainsi ledit deuxième revêtement, par redéposition dudit composé résiduel à la surface de la paroi en verre 2, ledit deuxième revêtement étant plus uniforme et / ou transparent que le premier revêtement initial.

Avantageusement, le procédé selon l'invention comprend, après ladite étape de projection, une étape d'inspection optique (de préférence visuelle), de ladite paroi en verre 2, visant en particulier à rechercher la présence éventuelle de défauts verriers. Avantageusement, ladite étape d'inspection optique peut être réalisée à l'aide de tout dispositif et selon tout procédé d'inspection visuelle connus. De préférence, ladite étape d'inspection optique pourra être réalisée à l'aide d'un dispositif d'inspection par vision artificielle connu, avantageusement automatisé, conçu par exemple pour détecter et identifier des défauts de contraste. Bien évidemment, l'étape d'inspection optique pourra au contraire être réalisée manuellement par un opérateur, par exemple à l'œil nu.

De manière préférentielle, ladite étape d'inspection optique est réalisée après ladite étape de séchage forcé. De la sorte, on limite autant que possible toute perturbation visuelle, tout effet optique indésirable, qui pourrait éventuellement être généré(e) par la présence des gouttelettes de liquide à la surface de la paroi en verre 2 du récipient 1 inspecté, et à leurs éventuelle coalescence et ruissellement en cours d'inspection.

Une étude par microscopie électronique à balayage (MEB) a été menée par la titulaire afin d'observer l'influence, à l'échelle microscopique, du procédé selon l'invention sur l'aspect de surface de la paroi en verre 2. Au cours de cette étude, des fragments de paroi d'un premier et d'un deuxième flacons en verre de Type II, tous deux obtenus à partir de flacons en verre sodosilicocalcique classique (Type III) soumis à un traitement de désalcalinisation de surface au sulfate d'ammonium, ont été comparés. A la différence du premier flacon (flacon témoin), le deuxième flacon a été soumis au procédé selon l'invention, le liquide projeté sous forme de gouttelettes étant de l'eau ultra pure.

A la figure 4, sont présentés des clichés MEB d'une portion de surface d'un fragment de paroi en verre du premier flacon. A la figure 5, sont présentés pour comparaison des clichés MEB d'une portion de surface d'un fragment de paroi en verre du deuxième flacon, traité conformément à l'invention.

Comme cela ressort de la figure 5, l'observation au microscope électronique à balayage confirme bien la présence d'un revêtement incluant un composé résiduel, en l'espèce des grains de sulfate de sodium, à la surface de la paroi en verre du deuxième flacon, traité conformément à l'invention. L'étape de projection du procédé selon l'invention se différencie donc bien d'une étape de lavage de la paroi en verre. On observe également qu'en l'absence de traitement (figure 4), les grains G de composé résiduel présents à la surface de la paroi du premier flacon correspondent à des agglomérats de plus petites particules. Leur morphologie apparaît sensiblement facettée, leurs formes sont relativement complexes, comme schématisé à la figure 6(a). On note même une certaine porosité de ces grains G. En revanche, après traitement selon le procédé de l'invention (figure 5), la densité de grains à la surface (nombre de grains par unité de surface) a légèrement diminué, la forme des grains G' est plus douce, les grains G' apparaissant globalement arrondis ou encore polis (comme schématisé à la figure 6(b)). Les petits grains, qui contribuent à l'opacité du premier revêtement, sont atténués voire disparaissent. Les grains les plus gros sont quant eux lissés par les gouttelettes projetées.

Cette observation microscopique de la modification de la configuration et de la morphologie des grains à la surface de la paroi en verre d'un récipient traité selon le procédé de l'invention permet d'expliquer le caractère plus uniforme du deuxième revêtement formé, et avantageusement aussi le caractère plus transparent de ce dernier.

Egalement, afin de caractériser plus spécifiquement l'amélioration de la transparence de la paroi en verre 2 du récipient 1 qui peut être avantageusement apportée par le procédé de traitement selon l'invention, des mesures comparatives complémentaires de transparence ont été réalisées, comme décrit ci-après, sur un récipient en verre de Type II non soumis au procédé selon l'invention et sur un récipient en verre de Type II soumis audit procédé.

Trois récipients à paroi en verre différents ont ainsi été analysés et comparés, à savoir :
- Récipient R₁ : flacon moulé de Type III de 50 mL (contenance à 90 % : 54 mL), en verre silicosodocalcique blanc ;
- Récipient R₂ : flacon de Type II de 50 mL (contenance à 90 % : 54 mL), obtenu à partir d'un flacon moulé de Type III en verre silicosodocalcique blanc (identique à R₁) soumis à un traitement de désalcalinisation au sulfate d'ammonium, non soumis au procédé selon l'invention ;
- Récipient R₃ : flacon de Type II de 50 mL (contenance à 90 % : 54 mL), obtenu à partir d'un flacon moulé de Type III en verre silicosodocalcique blanc soumis à un traitement de désalcalinisation au sulfate d'ammonium (identique à R₂), et soumis successivement à l'étape de projection (faces interne et externe) et à l'étape de séchage forcé du procédé selon l'invention.

La figure 7 illustre, de manière schématique, le montage expérimental retenu pour mesurer la transparence respective de ces récipients R₁, R₂ et R₃. Chacun des récipients R₁, R₂ et R₃ est positionné sur un support horizontal 11 devant un fond 12 noir pourvu de bandes blanches horizontales (mire). Ces bandes blanches sont formées par des fentes 13 découpées dans le fond noir, derrière lesquelles est positionnée une source lumineuse blanche (non illustrée). A l'aide d'un appareil photo reflex numérique, une photographie est prise de chacun des récipients R₁, R₂ et R₃ positionnés devant le fond 12 noir, dans l'obscurité complète. Puis, grâce à un logiciel de traitement d'images (par exemple, le logiciel « *ImageJ* » mentionné précédemment), les photographies prises sont chacune converties en une image numérique en niveau de gris 8 bits. On trace ensuite, à partir des images ainsi obtenues, un graphique d'échelle de niveaux de gris, correspondant à l'intensité lumineuse transmise à travers la paroi en verre des récipients R₁, R₂ et R₃, selon une ligne verticale correspondant à la hauteur des récipients suivant leur axe de révolution.

Le graphique ainsi obtenu est présenté à la figure 8. L'intensité lumineuse transmise est représentée (en niveau de gris) en ordonnées, et la distance entre la bague et le fond des récipients R₁, R₂ et R₃, selon l'axe de révolution de ces derniers, est représentée (en pixels) en abscisses. Dans le tableau 1 ci-dessous sont comparées les valeurs moyennes de l'intensité lumineuse transmise relevées pour chacun des récipients R₁, R₂ et R₃, en ne considérant que l'intensité lumineuse relative aux deux bandes blanches horizontales centrales.

**Tableau 1**

| Récipients | R₁ | R₂ | R₃ |
|---|---|---|---|
| Intensité *Iᵢ* lumineuse transmise à travers la paroi en verre du récipient R*ᵢ* (niveau de gris) | 166 | 108 | 152 |
| Intensité lumineuse relative *Iᵢ* / *I₁* (%) | 100 | 65 | 92 |

On constate ainsi que le récipient R₃, obtenu selon le procédé de l'invention, apparaît nettement plus transparent que le récipient R₂ qui n'a pas été soumis au procédé selon l'invention. Cependant, le récipient R₃ apparaît légèrement moins transparent que le récipient R₁ qui n'a pas subi de traitement de désalcalinisation, du fait de la présence du composé résiduel (en l'espèce, du sulfate de sodium) à la surface de la paroi en verre du récipient R₃. Avantageusement, en considérant que le récipient R₁ de Type III présente une transparence de 100 %, le récipient R₃ (obtenu après avoir fait subir au récipient R₁ un traitement de désalcalinisation, puis après l'avoir soumis au procédé de traitement selon l'invention) présente avantageusement une transparence relative comprise entre 80 et 100 %, selon notamment la mise en oeuvre ou non de l'étape de séchage forcé optionnelle du procédé de traitement selon l'invention.

En outre, des analyses complémentaires ont été réalisées par la titulaire pour investiguer la durabilité de l'amélioration de la transparence apportée par le procédé selon l'invention. Ces analyses ont démontré que le niveau de transparence de la paroi en verre des récipients obtenus à l'issue du procédé de traitement selon l'invention n'est pas notablement dégradé après un vieillissement en étuve à 60°C pendant 8 h.

Des essais ont également été réalisés afin d'étudier l'influence du procédé selon l'invention sur la résistance hydrolytique RH de surface du récipient à paroi en verre à l'issue dudit procédé. En particulier, des mesures comparatives ont été réalisées, tel que décrit ci-après, entre un récipient en verre de Type II non soumis au procédé selon l'invention et un récipient en verre de Type II soumis audit procédé.

Les deux récipients à paroi en verre suivants ont ainsi été analysés et comparés :
- Récipient R₄ : flacon de Type II de 50 mL (contenance à 90 % : 54 mL), obtenu à partir d'un flacon moulé de Type III en verre silicosodocalcique blanc soumis à un traitement de désalcalinisation au sulfate d'ammonium, non soumis au procédé selon l'invention (flacon de Type II classique) ;
- Récipient R₅ : flacon de Type II de 50 mL (contenance à 90 % : 54 mL), obtenu à partir d'un flacon moulé de Type III en verre silicosodocalcique blanc soumis à un traitement de désalcalinisation au sulfate d'ammonium (identique à R₁), et soumis au procédé selon l'invention (faces interne et externe).

La résistance hydrolytique RH de surface de la paroi en verre de chacun de ces récipients R₄ et R₅, a été mesurée selon les indications de la Pharmacopée Européenne, 9^{ème} édition, Chapitre 3.2.1, après stérilisation à 121°C pendant 1 h en autoclave avec de l'eau ultra-pure. Pour le type de flacon considéré, la valeur RH limite selon la Pharmacopée Européenne est de 0,5 ml HCl N/100 pour 100 ml d'autoclavat (eau d'extraction).

Les résultats obtenus sont présentés dans le tableau 2 ci-dessous :

**Tableau 2**

| | R4 | R5 |
|---|---|---|
| RH de surface (mL HCl N/100) | 0,05 ± 0,05 | 0,08 ± 0,05 |

Les mesures de résistance hydrolytique RH de surface démontrent ainsi que le procédé selon l'invention n'a avantageusement aucune conséquence notable sur le niveau de résistance hydrolytique conféré au récipient par l'étape de traitement de désalcalinisation auquel il a été préalablement soumis. La valeur RH reste avantageusement sensiblement comprise entre 5 % et 25 % de la valeur RH limite indiquée par la Pharmacopée Européenne pour le type de récipient considéré.

Egalement, une étude comparative du comportement de ces mêmes récipients R₄ et R₅ à un vieillissement en étuve à 60°C a été menée par la titulaire, selon le protocole suivant :
- soumission des récipients R₄ et R₅ à une étape de projection de liquide conforme au procédé selon l'invention (en l'espèce, à l'eau ultra pure),
- étuvage des récipients à 60°C pendant 2 h à 8 h,
- stérilisation des récipients à 121°C pendant 1 h en autoclave avec de l'eau ultra-pure,puis étuvage des récipients à 60°C pendant 2 h à 8 h, puis
- mesure de la résistance hydrolytique RH de surface selon la Pharmacopée Européenne, 9^{ème} édition, Chapitre 3.2.1. (Valeur RH selon la Pharmacopée Européenne : 0,5 ml HCl N/100 pour 100 ml d'autoclavat.).

Les résultats obtenus sont présentés dans le tableau 3 ci-dessous :

**Tableau 3**

| | R₄ | R₅ | | | | |
|---|---|---|---|---|---|---|
| Temps de vieillissement à 60°C (h) | / | 0 | 2 | 4 | 6 | 8 |
| RH de surface (mL HCl N/100) | 0,05 ± 0,05 | 0,08 ± 0,05 | 0,08 ± 0,05 | 0,06 ± 0,05 | 0,06 ± 0,05 | 0,06 ± 0,05 |

Les mesures de résistance hydrolytique RH de surface après vieillissement en étuve tendent à démontrer que le procédé selon l'invention n'a aucune conséquence notable sur la durabilité du niveau de résistance hydrolytique conféré au récipient par l'étape de traitement de désalcalinisation auquel il a été préalablement soumis.

Avantageusement, le procédé de l'invention est un procédé en ligne, destiné à une mise en oeuvre industrielle. Les différentes étapes décrites ci-avant peuvent à ce titre être avantageusement directement intégrées à un procédé de fabrication industrielle de récipients à paroi en verre, mis en oeuvre de manière préférentiellement automatisée.

L'invention concerne également, en tant que telle, une installation 14 de traitement d'un récipient 1 comprenant une paroi en verre 2 délimitant une cavité d'accueil 3 pour un produit, ladite paroi en verre 2 présentant une face interne 4 située en regard de ladite cavité d'accueil 3 et une face externe 5 opposée. L'installation 14 en question est avantageusement une installation permettant la mise en oeuvre d'un procédé de traitement conforme à l'invention, de sorte que la description exposée dans ce qui précède en relation avec le procédé selon l'invention reste valable et applicable, *mutatis mutandis*, à la présente installation. Il s'agit préférentiellement d'une installation industrielle, avantageusement automatisée, conçue pour traiter de manière sensiblement ininterrompue un grand nombre de récipients. De préférence, l'installation 14 est conçue pour être directement intégrée dans une ligne de production verrière, en aval de la machine de formage du récipient 1.

Un mode de réalisation particulièrement préférentiel de l'installation 14 selon l'invention est illustré de manière schématique à la figure 9. La flèche présente sur la figure 9 indique le sens préférentiel de progression dudit récipient 1 relativement aux différents postes comprend ladite installation 14, et qui vont faire ci-après l'objet d'une description détaillée. Les termes « *amont* » et « *aval* » utilisés dans ce qui suit seront préférentiellement à interpréter en considération du sens de progression, indiqué par cette flèche, du récipient 1 au sein de l'installation 14 selon l'invention.

Selon l'invention, ladite installation 14 comprend un poste de traitement de surface 15 de ladite paroi en verre 2 pour soumettre ledit récipient 1 à une étape de traitement de surface de ladite paroi en verre 2 conduisant à la formation, sur ladite paroi en verre 2, d'un premier revêtement qui inclut un composé résiduel solide. Avantageusement, ledit poste de traitement de surface 15 est conçu pour permettre la mise en oeuvre de l'étape de traitement de surface qui a été décrite ci-avant en lien avec le procédé selon l'invention. Plus précisément, ledit poste de traitement de surface 15 est un poste de désalcalinisation du verre au voisinage de la surface de ladite face interne 4 de ladite paroi en verre 2. A ce titre, ledit poste de désalcalinisation pourra être avantageusement conçu pour permettre l'introduction au sein de la cavité d'accueil 3 du récipient 1, par l'ouverture 10 de ce dernier, d'une substance contenant du soufre, tel qu'en particulier du sulfate d'ammonium.

De préférence, l'installation 14 selon l'invention comprend un poste de recuisson dudit récipient 1, par exemple de type arche. Afin de simplifier la conception de l'installation 14, ledit poste de traitement de surface 15 pourra éventuellement être confondu avec (ou intégré dans) ledit poste de recuisson. Alternativement, ledit poste de traitement de surface 15 pourra être positionné en amont dudit poste de recuisson.

Tel qu'illustré schématiquement à la figure 9, l'installation 14 selon l'invention comprend un poste de projection 16 de gouttelettes d'un liquide à la surface de ladite paroi en verre 2, ledit poste de projection 16 étant positionné en aval dudit poste de traitement de surface 15. Avantageusement, ledit poste de projection 16 est conçu pour permettre la mise en oeuvre de l'étape de projection qui a été décrite ci-avant en lien avec le procédé selon l'invention. Avantageusement, et conformément à ce qui précède, ledit poste de projection 16 est conçu et configuré pour permettre *in fine* la formation sur ladite paroi en verre, à partir dudit premier revêtement, un deuxième revêtement qui inclut ledit composé résiduel et qui est plus transparent et / ou plus uniforme que ledit premier revêtement.

De manière préférentielle, ledit poste de projection 16 comprend au moins un dispositif de projection 17 (par exemple de type buse ou gicleur), qui est avantageusement configuré pour être positionné, en fonctionnement, à l'extérieur du récipient 1, et plus préférentiellement encore, au-dessus et en regard de la bague 9 et de l'ouverture 10 du récipient 1, tel qu'illustré schématiquement aux figures 3 et 10. De préférence, ledit dispositif de projection 17 est conçu pour être immobile relativement au récipient 3 lorsque ledit dispositif de projection 17 est en fonctionnement. Ledit poste de projection 16 est ainsi avantageusement dépourvu de tout dispositif d'injection mobile complexe (par exemple de type pipette ou tube) qui serait conçu pour être introduit dans la cavité d'accueil 3 du récipient 1 à traiter, par l'ouverture 10 de ce dernier, pour projeter les gouttelettes de liquide. Une telle configuration contribue à la simplicité de conception et de mise en oeuvre, ainsi qu'à la robustesse, de l'installation 14 selon l'invention. Bien entendu, l'installation 14 selon l'invention pourrait néanmoins comprendre un poste de projection 16 qui serait pourvu d'un tel dispositif d'injection mobile.

Préférentiellement, ledit poste de projection 16 est conçu et configuré pour projeter lesdites gouttelettes sous la forme d'un brouillard, c'est-à-dire sous la forme de très fines gouttelettes d'un diamètre moyen typiquement inférieur voire très inférieur à 1 mm, en suspension dans l'air ambiant (aérosol liquide). Par exemple, le dispositif de projection 17 du poste de projection 16 peut comprendre une buse, dotée d'un orifice de sortie à diamètre fixe ou variable, à partir duquel les gouttelettes seront projetées sous la forme moyenne d'un cône de projection préférentiellement plein. De manière plus avantageuse encore, ledit dispositif de projection 17 est conçu pour projeter des gouttelettes dudit liquide, dont le diamètre moyen est compris entre 1 et 10 µm, et de préférence entre 2 et 3 µm. Pour ce faire, ledit dispositif de projection 17 comprend préférentiellement un nébuliseur piézoélectrique ou ultrasonique, ou encore un atomiseur. D'autres dispositifs de projection convenables pourront bien sûr être alternativement envisagés.

Avantageusement, ledit dispositif de projection 17 peut être conçu et configuré pour projeter lesdites gouttelettes à l'aide d'un gaz vecteur sous pression, de préférence inerte (Ar, N₂, etc.). De manière préférentielle, le poste de projection 16 comprend des moyens de régulation de la quantité et de la température des gouttelettes projetées, ainsi que, le cas échéant, de la pression du gaz vecteur.

De préférence, ledit poste de projection 16 est conçu et configuré pour projeter les gouttelettes dudit liquide simultanément à la surface desdites faces interne 4 et externe 5 de ladite paroi en verre 2. Par exemple, ledit poste de projection 16 peut comprendre une pluralité de dispositifs 17 ou buses de projection, au moins un étant configuré pour venir en regard de l'ouverture 10 du récipient 1, comme évoqué ci-avant, les autres étant configurés pour venir en regard de la face externe 5 de la paroi en verre 2 du récipient 1. De préférence cependant, le ou les dispositifs projection 17 est / sont tous configuré(s) pour être positionné(s), en fonctionnement, au-dessus et en regard de la bague 9 et de l'ouverture 10 du récipient 1.

Avantageusement, ledit poste de projection 16 comprend des moyens de réglage (non illustrés) de la distance entre ledit dispositif de projection 17 et ladite paroi en verre 2, et en particulier de la distance entre le dispositif de projection 17 d'une part, et la bague 9 et l'ouverture 10 du récipient 1 à traiter d'autre part. Le poste de projection 16 comprend de préférence, également ou alternativement, des moyens de réglage de l'angle θ du cône de projection dudit dispositif de projection 17 (figure 3), de sorte que ledit l'angle θ est de préférence compris entre 20 et 100°. Ainsi, ledit poste de projection 16 peut s'adapter à différentes géométries et les dimensions de récipients à traiter. Le réglage de l'angle θ du cône de projection de gouttelettes par le dispositif de projection 17 facilite avantageusement, en outre, la projection simultanée des gouttelettes dudit liquide simultanément à la surface desdites faces interne 4 et externe 5 de ladite paroi en verre 2.

De préférence, l'installation 14 comprend un poste de séchage forcé 18 de ladite paroi en verre 2, qui est positionné en aval dudit poste de projection 16. Avantageusement, ledit poste de séchage forcé 18 est conçu pour permettre la mise en oeuvre de l'étape de séchage forcé qui a été décrite ci-avant en lien avec le procédé selon l'invention. Le poste de séchage forcé 18 comprendre préférentiellement un système de projection (non illustré, par exemple de type buse ou rampe) en direction de la surface de la paroi en verre 2, et de préférence depuis l'extérieur du récipient 3, d'un flux forcé de gaz sec (air ou gaz inerte, tel que Ar, N₂, etc.). Avantageusement, le poste de séchage forcé 18 est conçu et configuré pour projeter un flux forcé de gaz sec simultanément sur les surfaces respectives des faces interne 4 et externe 5 de la paroi en verre 2.

Avantageusement, l'installation 14 comprend un poste d'inspection optique 19 de ladite paroi en verre 2, positionné en aval dudit poste de projection 16. Avantageusement, ledit poste de séchage forcé 18 est conçu pour permettre la mise en oeuvre de l'étape d'inspection optique qui a été décrite ci-avant en lien avec le procédé selon l'invention. Ledit poste d'inspection optique 19 peut comprendre tout dispositif connu d'inspection optique, et en particulier d'inspection visuelle, aptes à détecter des défauts verriers niveau de la paroi en verre 2 du récipient 1. De préférence, il comprend au moins un dispositif d'inspection par vision artificielle, avantageusement automatisé, conçu par exemple pour détecter et identifier des défauts de contraste au niveau de la paroi en verre 2 du récipient 1. De préférence, il s'agit d'un moyen opérant dans le domaine visible du spectre électromagnétique. Bien évidemment, ledit poste d'inspection optique 19 pourra au contraire comprendre des moyens connus d'inspection visuelle manuelle de ladite paroi en verre 2. De préférence, ledit poste d'inspection optique 19 est positionné en aval dudit poste de séchage forcé 18, de sorte que la paroi en verre 2 du récipient 1 est avantageusement sensiblement dépourvue de gouttelettes de liquide lorsque ledit récipient 1 arrive au niveau du poste d'inspection optique 19 en provenance dudit poste de séchage forcé 18.

De préférence, ladite installation 10 comprend également des moyens de convoyage 20, par exemple de type convoyeurs à bande, à chaîne ou encore à rouleaux, pour assurer le transfert du récipient 1 depuis le poste de traitement de surface 15 jusqu'au poste de projection 16 et, avantageusement, depuis ledit poste de projection 16 jusqu'au poste d'inspection optique 19, en passant de préférence par le poste de séchage forcé 18.

Ceci étant exposé, on notera que l'idée à la base de l'invention décrite ci-dessus, consistant à obtenir, à partir d'un premier revêtement incluant un composé résiduel, un deuxième revêtement qui inclut le composé résiduel et qui est plus transparent et/ou plus uniforme que le premier revêtement par projection de gouttelettes d'un liquide, pourrait éventuellement être étendue à des étapes de traitement de surface (et postes de traitement correspondants) de natures différentes. En effet, cette idée peut, plus généralement, trouver un intérêt dès lors que l'on est en présence d'un récipient à paroi en verre qui comprend un composé résiduel solide déposé sur la paroi en verre et résultant d'une étape de traitement de surface à laquelle ledit récipient a été préalablement soumis, et que la présence de ce composé résiduel est, en particulier, susceptible de gêner l'inspection optique du récipient.

Ainsi, pourrai(en)t constituer une invention en tant que telle :
- un procédé de traitement d'un récipient comprenant une paroi en verre délimitant une cavité d'accueil pour un produit, ladite paroi en verre présentant une face interne située en regard de ladite cavité d'accueil et une face externe opposée, ladite paroi en verre étant pourvue d'un premier revêtement qui inclut un composé résiduel solide résultant d'une étape de traitement de surface de ladite paroi en verre à laquelle ledit récipient a été préalablement soumis, ledit procédé comprenant une étape de projection à la surface de ladite paroi en verre de gouttelettes d'un liquide, afin de former sur ladite paroi en verre, à partir dudit premier revêtement, un deuxième revêtement qui inclut ledit composé résiduel et qui est plus transparent et / ou plus uniforme que ledit premier revêtement ;
   et/ou
- une installation de traitement d'un récipient comprenant une paroi en verre délimitant une cavité d'accueil pour un produit, ladite paroi en verre présentant une face interne située en regard de ladite cavité d'accueil et une face externe opposée, ladite installation comprenant un poste de traitement de surface de ladite paroi en verre pour soumettre ledit récipient à une étape de traitement de surface de ladite paroi en verre conduisant à la formation sur ladite paroi en verre d'un premier revêtement qui inclut un composé résiduel solide, ladite installation comprenant un poste de projection à la surface de ladite paroi en verre de gouttelettes d'un liquide, ledit poste de projection étant positionné en aval dudit poste de traitement de surface.

### POSSIBILITE D'APPLICATION INDUSTRIELLE

L'invention trouve son application industrielle dans le domaine des procédés et installations de traitement de récipients à paroi verre, et notamment dans le domaine des procédés et installations de traitement d'emballages primaires en verre à usage pharmaceutique ou diagnostique.

## Revendications

1. Procédé de traitement d'un récipient (1) comprenant une paroi en verre (2) délimitant une cavité d'accueil (3) pour un produit, ladite paroi en verre (2) présentant une face interne (4) située en regard de ladite cavité d'accueil (3) et une face externe (5) opposée, ladite paroi en verre (2) du récipient (1) étant en verre contenant au moins un oxyde alcalin ou alcalino-terreux, ladite paroi en verre (2) étant pourvue d'un premier revêtement qui inclut un composé résiduel solide résultant d'une étape de traitement de surface de ladite paroi en verre (2) à laquelle ledit récipient (1) a été préalablement soumis, ladite étape de traitement de surface étant une étape de désalcalinisation du verre au voisinage de la surface de ladite face interne (4) de ladite paroi en verre (2), ledit procédé comprenant une étape de projection à la surface de ladite paroi en verre (2) de gouttelettes d'un liquide, afin de former sur ladite paroi en verre (2), à partir dudit premier revêtement, un deuxième revêtement qui inclut ledit composé résiduel et qui est plus transparent et / ou plus uniforme que ledit premier revêtement, ledit liquide étant transparent et étant soit un liquide dans lequel le composé résiduel solide est susceptible d'être mis en suspension, soit un solvant du composé résiduel solide.

2. Procédé selon la revendication précédente, dans lequel ledit composé résiduel est poudreux.

3. Procédé selon l'une quelconque des revendications précédentes, dans lequel ladite étape de désalcalinisation comprend un traitement de ladite face interne (4) avec une substance contenant du soufre, ledit composé résiduel solide contenant de préférence du sulfate de sodium.

4. Procédé selon l'une quelconque des revendications précédentes, dans lequel ladite étape de projection est réalisée sur ledit récipient (1), ce dernier étant à température comprise entre 0 et 100°C, et de préférence à température ambiante.

5. Procédé selon l'une quelconque des revendications précédentes, dans lequel ledit liquide est projeté sous la forme d'un brouillard, de préférence au moins 95 % desdites gouttelettes ayant un diamètre compris entre 1 et 10 µm, et de préférence entre 2 et 3 µm.

6. Procédé selon l'une quelconque des revendications précédentes, dans lequel ledit liquide est un solvant dudit composé résiduel solide.

7. Procédé selon la revendication précédente, dans lequel ledit solvant est de l'eau, de préférence de l'eau ultra pure.

8. Procédé selon l'une quelconque des revendications précédentes, lequel comprend, après ladite étape de projection, une étape de séchage forcé de ladite paroi en verre (2).

9. Procédé selon l'une quelconque des revendications précédentes, lequel comprend, après ladite étape de projection, une étape d'inspection optique de ladite paroi en verre (2).

10. Installation (14) permettant la mise en oeuvre d'un procédé de traitement conforme à l'une quelconque des revendications précédentes, ladite installation (14) comprenant un poste de traitement de surface (15) de ladite paroi en verre (2) pour soumettre ledit récipient (1) à une étape de traitement de surface de ladite paroi en verre (2) conduisant à la formation sur ladite paroi en verre (2) d'un premier revêtement qui inclut un composé résiduel solide, ledit poste de traitement de surface (15) étant un poste de désalcalinisation du verre au voisinage de la surface de la face interne (4) de ladite paroi en verre (2), ladite installation (14) comprenant un poste de projection (16) à la surface de ladite paroi en verre (2) de gouttelettes d'un liquide, ledit liquide étant transparent et étant soit un liquide dans lequel le composé résiduel solide est susceptible d'être mis en suspension, soit un solvant du composé résiduel solide, ledit poste de projection (16) étant positionné en aval dudit poste de traitement de surface (15).

11. Installation (14) selon la revendication précédente, dans laquelle ledit poste de projection (16) est conçu et configuré pour projeter les gouttelettes dudit liquide simultanément à la surface desdites faces interne (4) et externe (5) de ladite paroi en verre (2).

12. Installation (14) selon l'une quelconque des revendications 10 et 11, dans laquelle ledit poste de projection (16) comprend un dispositif de projection (17), et des moyens de réglage de la distance entre ledit dispositif de projection (17) et ladite paroi en verre (2), et de l'angle (θ) du cône de projection dudit dispositif de projection (17), lequel angle (θ) est de préférence compris entre 20 et 100°.

13. Installation (14) selon l'une quelconque des revendications 10 à 12, dans laquelle ledit poste de projection (16) est conçu et configuré pour projeter lesdites gouttelettes sous la forme d'un brouillard, le diamètre moyen desdites gouttelettes étant de préférence compris entre 1 et 10 µm, et de préférence entre 2 et 3 µm.

14. Installation (14) selon l'une quelconque des revendications 10 à 13, laquelle comprend, en aval dudit poste de projection (16), un poste de séchage forcé (18) de ladite paroi en verre (2).

15. Installation (14) selon l'une quelconque des revendications 10 à 14, laquelle comprend, en aval dudit poste de projection (16), un poste d'inspection optique (19) de ladite paroi en verre (2).

## Patentansprüche

1. Verfahren zur Behandlung eines Behälters (1), umfassend eine Glaswand (2), die einen Aufnahmehohlraum (3) für ein Produkt begrenzt, wobei die Glaswand (2) eine Innenseite (4), die sich gegenüber dem Aufnahmehohlraum (3) befindet, und eine entgegengesetzt angeordnete Außenseite (5) aufweist, wobei die Glaswand (2) des Behälters (1) aus Glas, umfassend mindestens ein alkalisches oder erdalkalisches Oxid, ist, wobei die Glaswand (2) mit einer ersten Beschichtung versehen ist, die eine feste Restverbindung enthält, die aus einem Oberflächenbehandlungsschritt der Glaswand (2) stammt, welchem der Behälter (1) vorher unterzogen wurde, wobei der Oberflächenbehandlungsschritt ein Schritt einer Entalkalisierung des Glases in der Nähe der Oberfläche der Innenseite (4) der Glaswand (2) ist, wobei das Verfahren einen Schritt des Spritzens von Tröpfchen einer Flüssigkeit auf die Oberfläche der Glaswand (2) umfasst, um auf der Glaswand (2) ausgehend von der ersten Beschichtung eine zweite Beschichtung zu bilden, die die Restverbindung enthält und transparenter und/oder einheitlicher als die erste Beschichtung ist, wobei die Flüssigkeit transparent ist und entweder eine Flüssigkeit, in der die feste Restverbindung suspendiert werden kann, oder ein Lösungsmittel für die feste Restverbindung ist.

2. Verfahren nach dem vorhergehenden Anspruch, bei dem die Restverbindung pulverförmig ist.

3. Verfahren nach einem der vorhergehenden Ansprüche, bei dem der Schritt der Entalkalisierung eine Behandlung der Innenseite (4) mit einer Schwefel enthaltenden Substanz umfasst, wobei die feste Restverbindung vorzugsweise Natriumsulfat enthält.

4. Verfahren nach einem der vorhergehenden Ansprüche, bei dem der Spritzschritt auf den Behälter (1) durchgeführt wird, wobei dieser letztgenannte auf einer Temperatur zwischen 0 und 100 °C und vorzugsweise auf Zimmertemperatur ist.

5. Verfahren nach einem der vorhergehenden Ansprüche, bei dem die Flüssigkeit in Form eines Sprühnebels aufgespritzt wird, wobei vorzugsweise mindestens 95 % der Tröpfchen einen Durchmesser zwischen 1 und 10 µm und vorzugsweise zwischen 2 und 3 µm haben.

6. Verfahren nach einem der vorhergehenden Ansprüche, bei dem die Flüssigkeit ein Lösungsmittel der festen Restverbindung ist.

7. Verfahren nach dem vorhergehenden Anspruch, bei dem das Lösungsmittel Wasser, vorzugsweise ultrareines Wasser, ist.

8. Verfahren nach einem der vorhergehenden Ansprüche, welches nach dem Spritzschritt einen Schritt einer forcierten Trocknung der Glaswand (2) umfasst.

9. Verfahren nach einem der vorhergehenden Ansprüche, welches nach dem Spritzschritt einen Schritt einer optischen Überprüfung der Glaswand (2) umfasst.

10. Vorrichtung (14), die den Einsatz eines Behandlungsverfahrens nach einem der vorhergehenden Ansprüche ermöglicht, wobei die Vorrichtung (14) eine Station zur Oberflächenbehandlung (15) der Glaswand (2) umfasst, um den Behälter (1) einem Schritt einer Oberflächenbehandlung der Glaswand (2) zu unterziehen, der zur Bildung einer ersten Beschichtung auf der Glaswand (2), die eine feste Restverbindung einschließt, führt, wobei die Station zur Oberflächenbehandlung (15) eine Station zur Entalkalisierung des Glases in der Nähe der Oberfläche der Innenseite (4) der Glaswand (2) ist, wobei die Vorrichtung (14) eine Station (16) zum Spritzen von Tröpfchen einer Flüssigkeit auf die Oberfläche der Glaswand (2) umfasst, wobei die Flüssigkeit transparent ist und entweder eine Flüssigkeit, in der die feste Restverbindung suspendiert werden kann, oder ein Lösungsmittel für die feste Restverbindung ist, wobei die Spritzstation (16) stromabwärts zu der Oberflächenbehandlungsstation (15) angeordnet ist.

11. Vorrichtung (14) nach dem vorhergehenden Anspruch, bei der die Spritzstation (16) eingerichtet und dazu vorgesehen ist, die Tröpfchen der Flüssigkeit gleichzeitig auf die Oberfläche der Innen- (4) und Außenseiten (5) der Glaswand (2) aufzuspritzen.

12. Vorrichtung (14) nach einem der Ansprüche 10 und 11, bei der die Spritzstation (16) eine Spritzvorrichtung (17) und Mittel zur Einstellung des Abstands zwischen der Spritzvorrichtung (17) und der Glaswand (2) und des Winkels (θ) des Spritzkegels der Spritzvorrichtung (17) umfasst, wobei der Winkel (θ) vorzugsweise zwischen 20 und 100 ° beträgt.

13. Vorrichtung (14) nach einem der Ansprüche 10 bis 12, bei der die Spritzstation (16) eingerichtet und dazu vorgesehen ist, die Tröpfchen in Form eines Sprühnebels aufzuspritzen, wobei der mittlere Durchmesser der Tröpfchen vorzugsweise zwischen 1 und 10 µm und vorzugsweise zwischen 2 und 3 µm beträgt.

14. Vorrichtung (14) nach einem der Ansprüche 10 bis 13, welche stromabwärts zu der Spritzstation (16) eine Station einer forcierten Trocknung (18) der Glaswand (2) umfasst.

15. Vorrichtung (14) nach einem der Ansprüche 10 bis 14, welche stromabwärts zu der Spritzstation (16) eine Station zur optischen Überprüfung (19) der Glaswand (2) umfasst.

## Claims

1. A method for processing a container (1) having a glass wall (2) delimiting a cavity (3) for accommodating a product, said glass wall (2) having an inner face (4) located facing said accommodation cavity (3) and an opposite outer face (5), said glass wall (2) of container (1) being made of a glass containing at least one alkaline or alkaline earth oxide, said glass wall (2) being provided with a first coating that includes a solid residual compound resulting from a step of surface treatment of said glass wall (2), to which said container (1) has been previously subjected, said surface treatment step being a step of dealkalizing the glass in the vicinity of the surface of said inner face (4) of said glass wall (2), said method comprising a step of spraying droplets of a liquid onto the surface of said glass wall (2), in order to form on said glass wall (2), from said first coating, a second coating that includes said residual compound and that is more transparent and/or more uniform than said first coating, said liquid being transparent and being either a liquid in which the solid residual compound is liable to be dispersed or a solvent of the solid residual compound.

2. The method according to the preceding claim, wherein said residual compound is powdery.

3. The method according to any one of the preceding claims, wherein said dealkalization step comprises a treatment of said inner face (4) with a substance containing sulphur, said solid residual compound preferably containing sodium sulphate.

4. The method according to any one of the preceding claims, wherein said spraying step is performed on said container (1), the latter being at a temperature comprised between 0 and 100°C, and still preferably at ambient temperature.

5. The method according to any one of the preceding claims, wherein said liquid is sprayed in the form of a fog, preferably at least 95 % of said droplets having a diameter comprised between 1 and 10 µm, and preferably between 2 and 3 µm.

6. The method according to any one of the preceding claims, wherein said liquid is a solvent of said solid residual compound.

7. The method according to the preceding claim, wherein said solvent is water, preferably ultra-pure water.

8. The method according to any one of the preceding claims, which comprises, after said spraying step, a step of forced drying said glass wall (2).

9. The method according to any one of the preceding claims, which comprises, after said spraying step, a step of optical inspection of said glass wall (2).

10. A facility (14) allowing the implementation of a processing method according to any one of the preceding claims, said facility (14) comprising a station (15) for surface treating said glass wall (2), for subjecting said container (1) to a step of surface treatment of said glass wall (2) leading to the formation on said glass wall (2) of a first coating that includes a solid residual compound, said surface treatment station (15) being a station for dealkalizing the glass in the vicinity of the surface of the inner face (4) of said glass wall (2), said facility (14) comprising a station (16) for spraying droplets of a liquid onto the surface of said glass wall (2), said liquid being transparent and being either a liquid in which the solid residual compound is liable to be dispersed or a solvent of the solid residual compound, said spraying station (16) being positioned downstream from said surface treatment station (15).

11. The facility (14) according to the preceding claim, wherein said spraying station (16) is designed and configured to spray the droplets of said liquid simultaneously onto the surface of said inner (4) and outer (5) faces of said glass wall (2).

12. The facility (14) according to any one of claims 10 and 11, wherein said spraying station (16) comprises a spraying device (17), and means for adjusting the distance between said spraying device (17) and said glass wall (2), and the angle (θ) of the spraying cone of said spraying device (17), wherein said angle (θ) is preferentially comprised between 20 and 100°.

13. The facility (14) according to any one of claims 10 to 12, wherein said spraying station (16) is designed and configured to spray said droplets in the form of a fog, the mean diameter of said droplets being preferably comprised between 1 and 10 µm, and preferably between 2 and 3 µm.

14. The facility (14) according to any one of claims 10 to 13, which comprises, downstream from said spraying station (16), a station (18) for forced drying said glass wall (2).

15. The facility (14) according to any one of claims 10 to 14, which comprises, downstream from said spraying station (16), a station (19) for the optical inspection of said glass wall (2).
